(19) Europäisches Patentamt
European Patent Office
Office européen des brevets

(11) **EP 4 633 142 A1**

(12) **EUROPEAN PATENT APPLICATION**

(43) Date of publication:
**15.10.2025 Bulletin 2025/42**

(21) Application number: **24305564.7**

(22) Date of filing: **08.04.2024**

(51) International Patent Classification (IPC):
**H04N 19/105** (2014.01)  **H04N 19/11** (2014.01)
**H04N 19/176** (2014.01)  **H04N 19/186** (2014.01)
**H04N 19/593** (2014.01)

(52) Cooperative Patent Classification (CPC):
**H04N 19/105; H04N 19/11; H04N 19/176;
H04N 19/186; H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **LE LEANNEC, Fabrice**
  **35830 BETTON (FR)**

• **NASER, Karam**
  **35250 MOUAZE (FR)**
• **BALCILAR, Muhammet**
  **35830 BETTON (FR)**
• **RADOSAVLJEVIC, Milos**
  **35000 RENNES (FR)**

(74) Representative: **Rittner, Karsten**
**Rittner & Partner**
**Patentanwälte mbB**
**Schiffgraben 17**
**30159 Hannover (DE)**

(54) **INTERACTION BETWEEN ADAPTIVE DUAL TREE AND CHROMA DIRECT BLOCK VECTOR PREDICTION MODE**

(57)   A device may determine whether a dual tree mode is enabled for a chroma prediction unit (PU) in a coding tree unit (CTU) based on a determination of whether a dual tree condition is satisfied. For example, the dual tree condition may comprise that the chroma PU is in an intra-predicted region for which the dual tree mode is enabled. The device may obtain a luma PU collocated with the chroma PU. The device may, e.g., based on a satisfaction of the dual tree condition and a determination that a sample at a location associated with the luma PU is reconstructed using a block vector associated with the luma PU, parse a direct block vector indicator for the chroma PU. The device may predict the chroma PU based on the DBV indicator. The device may decode the CTU based on the predicted chroma PU.

**FIG. 20**

**Description**

**BACKGROUND**

Video coding systems may be used to compress digital video signals, e.g., to reduce the storage and/or transmission bandwidth needed for such signals. Video coding systems may include, for example, block-based, wavelet-based, and/or object-based systems.

**SUMMARY**

Systems, methods, and instrumentalities are disclosed for a device configured for one or more of video coding (e.g., encoding and/or decoding), distribution, or consumption.

In examples, a device (e.g., a decoder for video decoding) may determine whether a dual tree mode is enabled for a chroma prediction unit (PU) in a coding tree unit (CTU) based on a determination of whether a local dual tree condition is satisfied. For example, the local dual tree condition may comprise that the chroma PU is in an intra-predicted region for which the dual tree mode is enabled. The intra-predicted region may be smaller than an area of the CTU. The device may obtain a luma PU collocated with the chroma PU. The device may, e.g., based on a satisfaction of the local dual tree condition and a determination that a sample at a location associated with the luma PU is reconstructed using a block vector (BV) associated with the luma PU, parse a direct block vector (DBV) indicator for the chroma PU. The device may predict the chroma PU based on the DBV indicator. The device may decode the CTU based on the predicted chroma PU.

In examples, the location may be one of a plurality of predetermined locations associated with a luma component of a current picture. The device may determine that cross-component prediction is not enabled for the chroma PU. The device may obtain a slice comprising the chroma PU. The device may determine the satisfaction of the local dual tree condition. The device may determine that the slice is not an intra slice.

In examples, the BV may be associated with intra block copy (IBC) or intra template matching prediction (intra TMP).

In examples, the location may be inside an area collocated with an area of the chroma PU.

In examples, the device may obtain a slice comprising the chroma PU. The device may determine that the slice is an inter slice and a local dual tree mode is enabled for the chroma PU. For example, the location associated with the luma PU may be determined using a boundary of the intra-predicted region. For example, the intra-predicted region may be in the CTU and comprises the chroma PU.

In examples, the device may determine a multiple type tree (MTT) partition depth associated with the local dual tree mode. For example, the intra-predicted region in the CTU may be determined (e.g., further) based on the MTT partition depth.

In examples, in the local dual tree mode, the dual tree mode may not be enabled for an entirety of the CTU. The dual tree mode may be enabled for the intra-predicted region in the CTU.

In examples, the device may obtain a decoded chroma PU in the intra-predicted region. The device may determine that the decoded chroma PU is decoded using DBV. For example, the DBV indicator for the chroma PU may be parsed based on the determination that the decoded chroma PU is decoded using DBV.

In examples, the device may determine DBV is enabled for the intra-predicted region. The device may predict a chroma component associated with the intra-predicted region using DBV. For example, the CTU may be decoded based on the predicted chroma component associated with the intra-predicted region.

In examples, a device (e.g., an encoder for video encoding) may determine whether a dual tree mode is enabled for a chroma prediction unit (PU) in a coding tree unit (CTU) based on a determination of whether a local dual tree condition is satisfied. For example, the local dual tree condition may comprise that the chroma PU is in an intra-predicted region for which the dual tree mode is enabled. The intra-predicted region may be smaller than an area of the CTU. The device may obtain a luma PU collocated with the chroma PU. The device may, e.g., based on a satisfaction of the local dual tree condition and a determination that a sample at a location associated with the luma PU is reconstructed using a block vector (BV) associated with the luma PU, send a direct block vector (DBV) indicator for the chroma PU. The device may predict the chroma PU based on the DBV indicator. The device may encode the CTU based on the predicted chroma PU.

**BRIEF DESCRIPTION OF THE DRAWINGS**

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 illustrates an example video encoder.

FIG. 3 illustrates an example video decoder.

FIG. 4 illustrates an example of a system in which various aspects and examples may be implemented.

FIG. 5 illustrates an example of Coding Tree Unit and Coding Tree concepts to represent a compressed picture.

FIG. 6 illustrates an example of division of a Coding Tree Unit into Coding Units, Prediction Units, and Transform Units.

FIG. 7 illustrates an example of Partitioning of Coding Units into Prediction Units.

FIG. 8 illustrates an example of Quad-Tree Plus Binary-Tree (QTBT) CTU representation.

FIG. 9 illustrates an example of Horizontal (e.g., HOR_TRIPLE) and Vertical (e.g., VER_TRIPLE) Triple Tree Coding Unit splitting modes.

FIG. 10 illustrates an example of a set of Coding Unit splitting modes supported in video coding.

FIG. 11 illustrates an example showing separate tree signaling in inter slices.

FIG. 12 illustrates an example of the current CTU processing order and the available reference samples in current and left CTU.

FIG. 13 illustrates an example of padding candidates for the replacement of the zero-vector in the IBC list.

FIG. 14 illustrates an example of a reference region for IBC.

FIG. 15 illustrates an example of an intra template matching search area.

Fig. 16 illustrates an example of a spatial part of a filter.

FIG. 17 illustrates an example of a reference area that may be used to derive filter coefficients.

Fig. 18 illustrates an example of luma blocks that may be used to derive a direct block vector.

FIG. 19 illustrates a flowchart showing an example of a process for decoding the intra prediction mode of a chroma PU.

FIG. 20 illustrates a flowchart showing an example of a process for decoding intra chroma mode when local-dual tree is enabled.

## DETAILED DESCRIPTION

A more detailed understanding may be had from the following description, given by way of example in conjunction with the accompanying drawings.

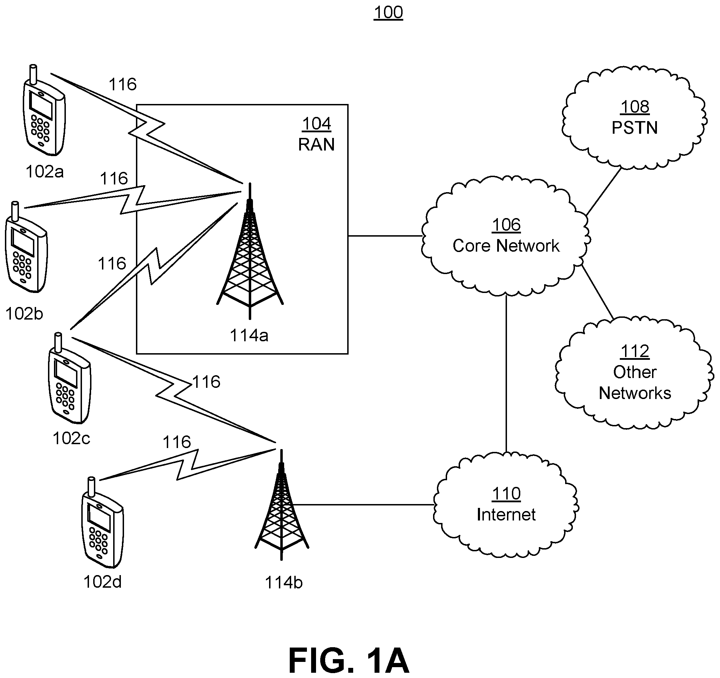

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

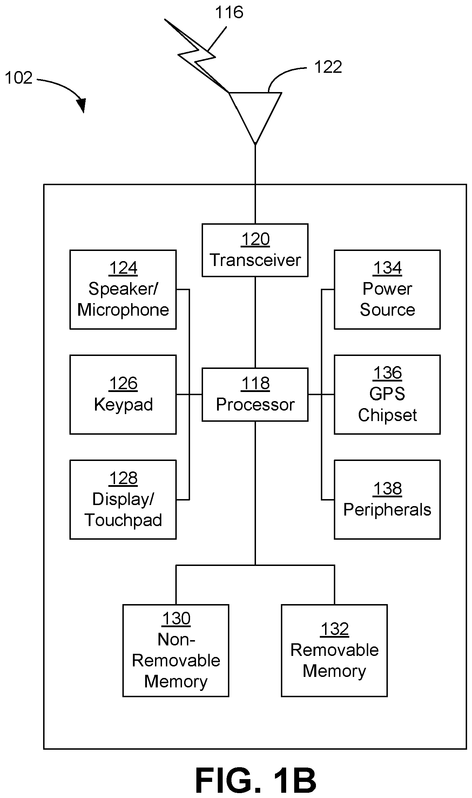

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

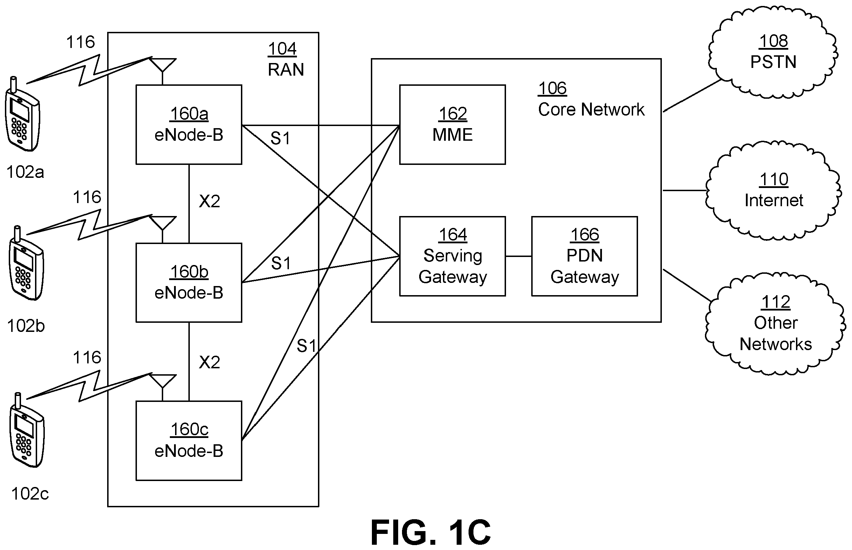

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11 ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11 ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

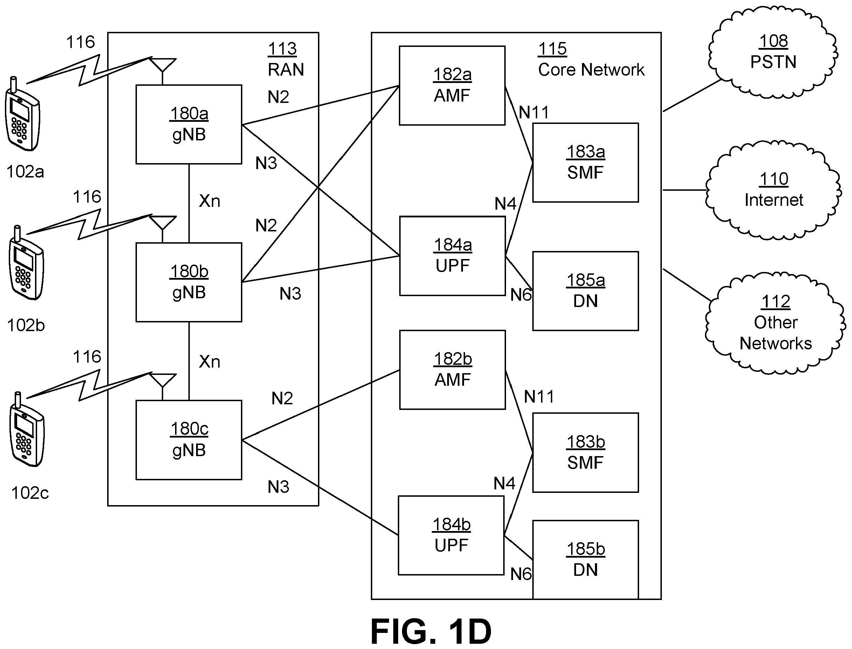

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the ON 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, ON 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

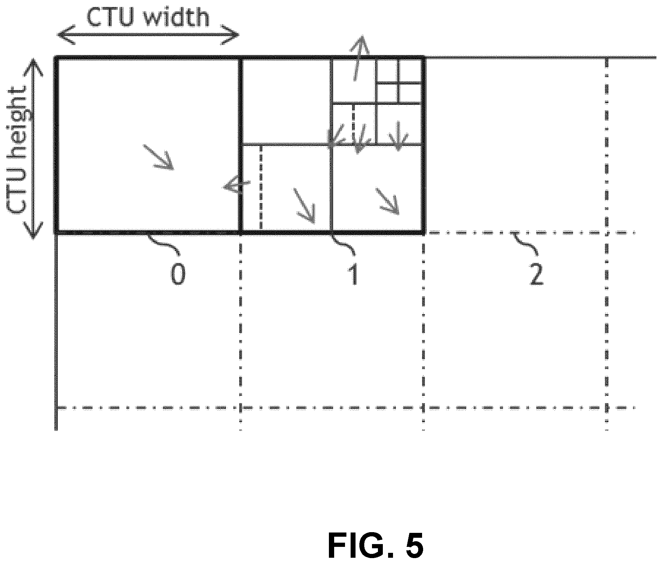

The aspects described and contemplated in this application may be implemented in many different forms. FIGS. 5-20 described herein may provide some examples, but other examples are contemplated. The discussion of FIGS. 5-20 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

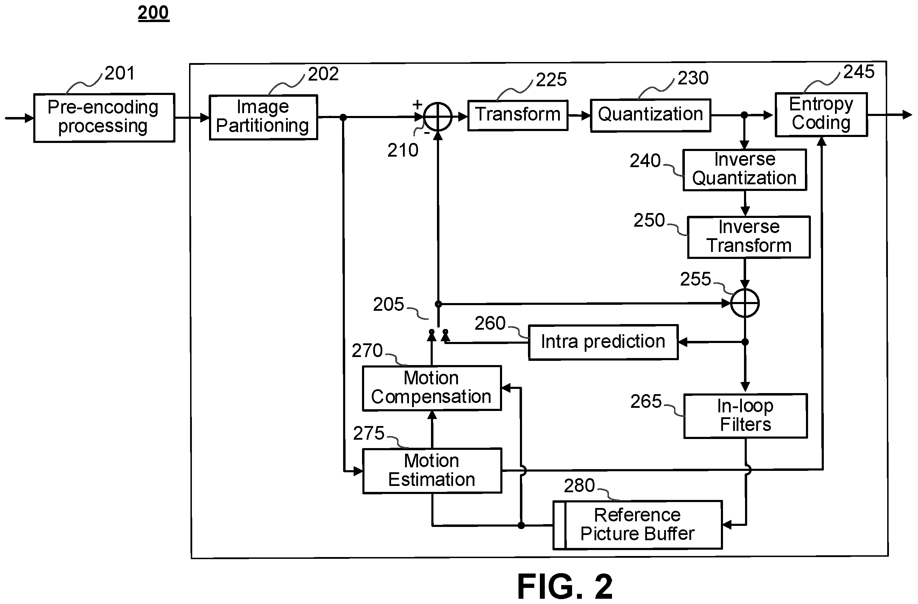

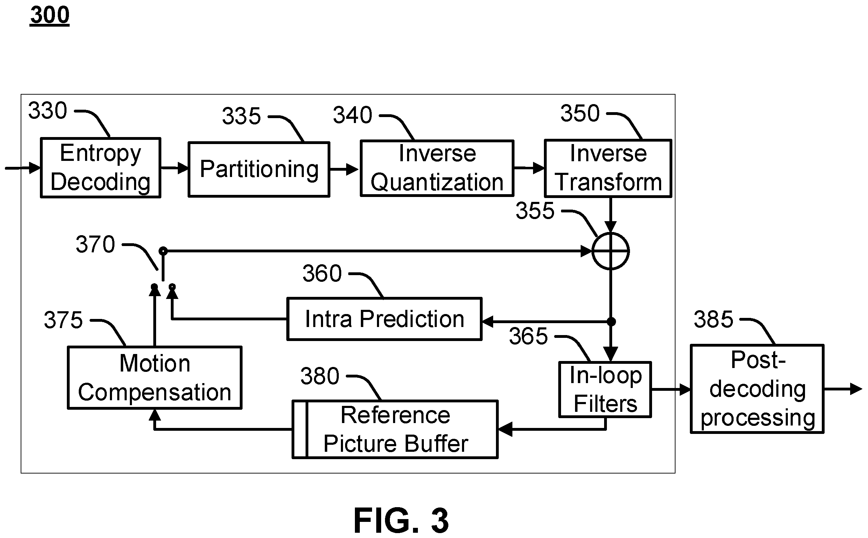

Various methods and other aspects described in this application may be used to modify modules, for example, decoding modules, of a video encoder 200 and decoder 300 as shown in FIG. 2 and FIG. 3. Moreover, the subject matter disclosed herein may be applied, for example, to any type, format or version of video coding, whether described in a standard or a recommendation, whether pre-existing or future-developed, and extensions of any such standards and recommendations. Unless indicated otherwise, or technically precluded, the aspects described in this application may be used individually or in combination.

Various numeric values are used in examples described the present application, such as chroma format (e.g., 4:2:0, 4:2:2, 4:4:4), block sizes or coding unit sizes (e.g., height, width), partition dimensions, number of search areas, number of sub areas or regions, search step sizes, number of reconstructed blocks, number of entries in a list, precision, number of directions, number of modes, number of candidates, candidate ordering, number of samples, number of references, bit values, sub-block sizes, number of parameters, multiplier values, constant values, range values, minimum values, maximum values, threshold values, index values, number of prediction modes, number of reference lines, index values, flag values, weight values, scaling parameter values, HMVP table size, MBVD refinement positions, number of block vectors, etc. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, such as picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filtering) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, prediction modes, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380). In some examples (e.g., for a given picture) the contents of the reference picture buffer 380 on the decoder 300 side may be identical to the contents of the reference picture buffer 280 on the encoder 200 side (e.g., for the same picture).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. In an example, the decoded images (e.g., after application of the in-loop filters (365) and/or after post-decoding processing (385), if post-decoding processing is used) may be sent to a display device for rendering to a user.

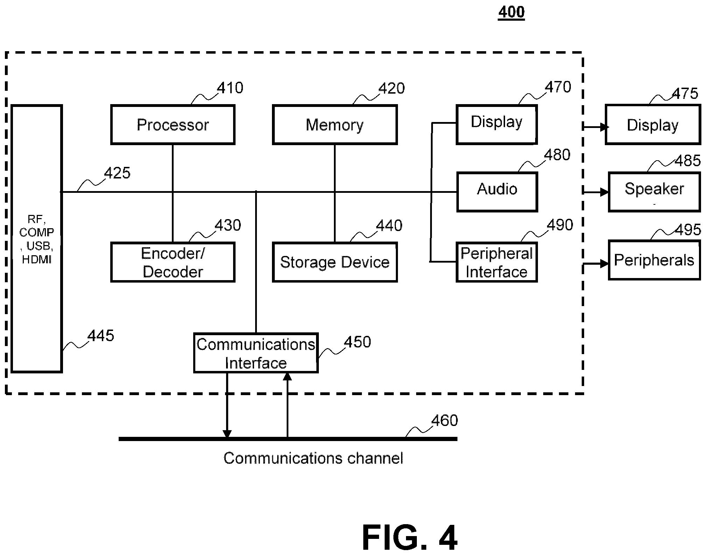

FIG. 4 is a diagram showing an example of a system in which various aspects and examples described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which may be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth® network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal may be provided via dedicated output connections, including, for example, HDMI ports, USB ports, or COMP outputs.

The examples may be carried out by computer software implemented by the processor 410 or by hardware, or by a combination of hardware and software. As a non-limiting example, the examples may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application, for example, determining whether a dual tree mode is enabled for a chroma prediction unit (PU) in a coding tree unit (CTU) based on a determination of whether a local dual tree condition is satisfied (e.g., where the local dual tree condition may comprise that the chroma PU is in an intra-predicted region for which the dual tree mode is enabled, and the intra-predicted region may be smaller than an area of the CTU); obtaining a luma PU collocated with the chroma PU; parsing a direct block vector (DBV) indicator for the chroma PU based on a satisfaction of the local dual tree condition and a determination that a sample at a location associated with the luma PU is reconstructed using a block vector (BV) associated with the luma PU; predicting the chroma PU based on the DBV indicator; decoding the CTU based on the predicted chroma PU, etc.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application, for example, determining whether a dual tree mode is enabled for a chroma prediction unit (PU) in a coding tree unit (CTU) based on a determination of whether a local dual tree condition is satisfied (e.g., where the local dual tree condition may comprise that the chroma PU is in an intra-predicted region for which the dual tree mode is enabled, and the intra-predicted region may be smaller than an area of the CTU); obtaining a luma PU collocated with the chroma PU; sending a direct block vector (DBV) indicator for the chroma PU based on a satisfaction of the local dual tree condition and a determination that a sample at a location associated with the luma PU is reconstructed using a block vector (BV) associated with the luma PU; predicting the chroma PU based on the DBV indicator; encoding the CTU based on the predicted chroma PU, etc.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, such as ctuAddr, culdx, puldx, tuldx, puPartldx, NO_SPLIT, QT_SPLIT, HOR, VER, HOR_TRIPLE, VER_TRIPLE, etc. are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. Encoder signals may include, for example, residual signals, metadata, coding or motion representation modes and related signals (e.g., ITMP-related flags, LIC-related flags), partitioning modes, reference pictures, motion vector predictors (MVPs), motion vector differences (MVDs), indices, candidate lists, prediction modes, merge modes, filter models, skip mode flag, IBC merge flag, prediction mode flag, intra mode flag, IBC mode flag, separate tree flag, cross-component (CC) flag, chromaDBV flag, dual tree mode flag, etc. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various examples. It is to be appreciated that signaling may be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on, or accessed or received from, a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

Systems, methods, and instrumentalities are disclosed for a device configured for one or more of video coding (e.g., encoding and/or decoding), distribution, or consumption.

In examples, a device (e.g., a decoder for video decoding) may determine whether a dual tree mode is enabled for a chroma prediction unit (PU) in a coding tree unit (CTU) based on a determination of whether a local dual tree condition is satisfied. For example, the local dual tree condition may comprise that the chroma PU is in an intra-predicted region for which the dual tree mode is enabled. The intra-predicted region may be smaller than an area of the CTU. The device may obtain a luma PU collocated with the chroma PU. The device may, e.g., based on a satisfaction of the local dual tree condition and a determination that a sample at a location associated with the luma PU is reconstructed using a block vector (BV) associated with the luma PU, parse a direct block vector (DBV) indicator for the chroma PU. The device may predict the chroma PU based on the DBV indicator. The device may decode the CTU based on the predicted chroma PU.

In examples, the location may be one of a plurality of predetermined locations associated with a luma component of a current picture. The device may determine that cross-component prediction is not enabled for the chroma PU. The device may obtain a slice comprising the chroma PU. The device may determine the satisfaction of the local dual tree condition. The device may determine that the slice is not an intra slice.

In examples, the BV may be associated with intra block copy (IBC) or intra template matching prediction (intra TMP).

In examples, the location may be inside an area collocated with an area of the chroma PU.

In examples, the device may obtain a slice comprising the chroma PU. The device may determine that the slice is an inter slice and a local dual tree mode is enabled for the chroma PU. For example, the location associated with the luma PU may be determined using a boundary of the intra-predicted region. For example, the intra-predicted region may be in the CTU and comprises the chroma PU.

In examples, the device may determine a multiple type tree (MTT) partition depth associated with the local dual tree mode. For example, the intra-predicted region in the CTU may be determined (e.g., further) based on the MTT partition depth.

In examples, in the local dual tree mode, the dual tree mode may not be enabled for an entirety of the CTU. The dual tree mode may be enabled for the intra-predicted region in the CTU.

In examples, the device may obtain a decoded chroma PU in the intra-predicted region. The device may determine that the decoded chroma PU is decoded using DBV. For example, the DBV indicator for the chroma PU may be parsed based on the determination that the decoded chroma PU is decoded using DBV.

In examples, the device may determine DBV is enabled for the intra-predicted region. The device may predict a chroma component associated with the intra-predicted region using DBV. For example, the CTU may be decoded based on the predicted chroma component associated with the intra-predicted region.

In examples, a device (e.g., an encoder for video encoding) may determine whether a dual tree mode is enabled for a chroma prediction unit (PU) in a coding tree unit (CTU) based on a determination of whether a local dual tree condition is satisfied. For example, the local dual tree condition may comprise that the chroma PU is in an intra-predicted region for which the dual tree mode is enabled. The intra-predicted region may be smaller than an area of the CTU. The device may obtain a luma PU collocated with the chroma PU. The device may, e.g., based on a satisfaction of the local dual tree condition and a determination that a sample at a location associated with the luma PU is reconstructed using a block vector (BV) associated with the luma PU, send a direct block vector (DBV) indicator for the chroma PU. The device may predict the chroma PU based on the DBV indicator. The device may encode the CTU based on the predicted chroma PU. A block structure may be implemented in video coding. For example, a picture may be divided into Coding Tree Units (CTUs). The size of a CTU may be, for example, 64x64, 128x128, or 256x256 pixels.

A (e.g., each) CTU may be represented by a Coding Tree in the compressed domain. Quad-tree division of the CTU may create leaves, where a (e.g., each) leaf may be referred to as a Coding Unit (CU). An example is shown in FIG. 5.

FIG. 5 illustrates an example of Coding Tree Unit and Coding Tree concepts to represent a compressed picture.

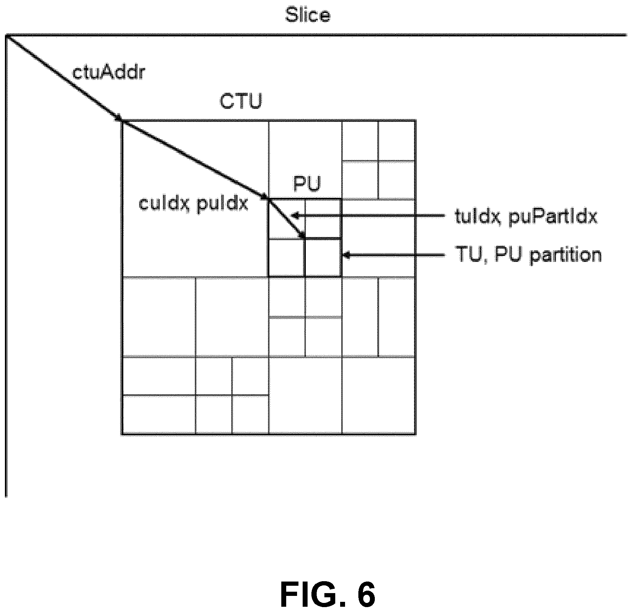

A (e.g., each) CU may be given Intra and/or Inter prediction parameters (e.g., Prediction Info). A CU may be spatially partitioned into one or more Prediction Units (PUs). A (e.g., each) PU may be assigned prediction information. An Intra or Inter coding mode may be assigned on a CU level. An example is shown in FIG. 6.

FIG. 6 illustrates an example of division of a Coding Tree Unit into Coding Units, Prediction Units, and Transform Units.

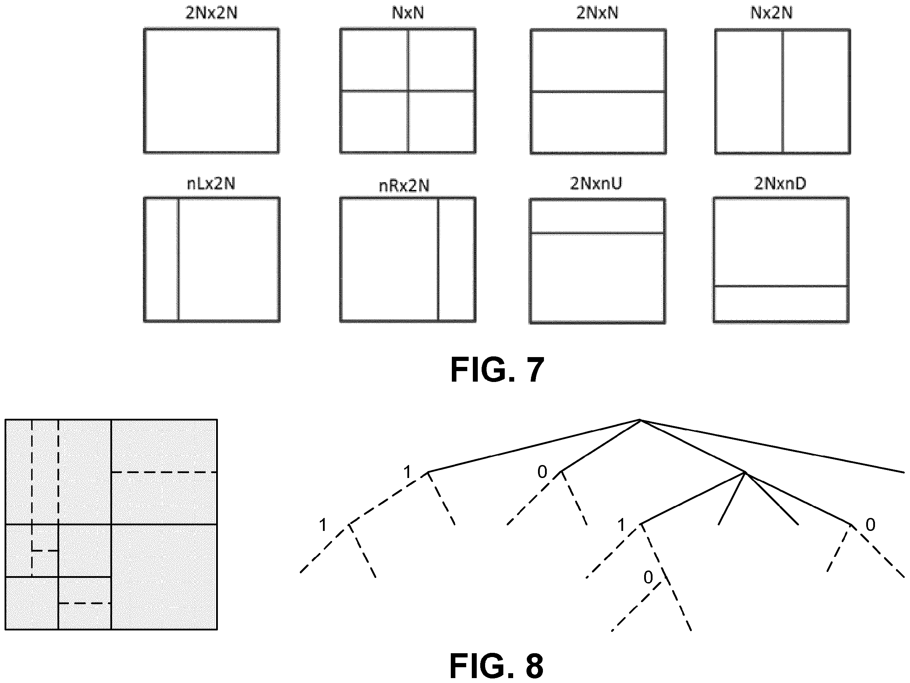

The Partitioning of a Coding Unit into Prediction Unit(s) may be done, for example, according to the partition type, which may be signaled in the bit-stream. An intra coding unit may use (e.g., only) the partition types 2Nx2N and NxN, as illustrated by example in FIG. 7. Square PUs (e.g., only square PUs) may be used in Intra Coding Units.

Inter Coding Units may use square and/or rectangular partition types. For example, inter coding units may use (e.g., all) the partition types shown by example in FIG. 7.

FIG. 7 illustrates an example of Partitioning of Coding Units into Prediction Units.

Coding Units may (e.g., also) be divided into transform units, e.g., in a recursive way, for example, following a "transform tree." A transform tree may be a quad-tree division of a coding unit. Transform units may be the leaf of the transform tree. A transform unit may encapsulate the square transform blocks of a (e.g., each) picture component corresponding to a considered square spatial area. A transform block may be a square block of samples in a single component, for example, where the same transform is applied.

A Coding Tree Unit representation in the compressed domain may represent picture data in a more flexible way. An advantage of flexible representation of the coding tree may be increased compression efficiency compared to the CU/PU/TU arrangement.

FIG. 8 illustrates an example of Quad-Tree Plus Binary-Tree (QTBT) CTU representation. A QTBT coding tool may provide the increased flexibility. A QTBT representation may include a coding tree, where coding units may be split in a quad-tree and/or in a binary-tree fashion. FIG. 8 shows an example of QTBT coding tree representation of a Coding Tree Unit.

The splitting of a coding unit may be decided on the encoder side, for example, based on (e.g., using) a rate distortion optimization procedure, which may include determining the QTBT representation of the CTU with a minimal rate distortion cost.

A CU may be a square or rectangular shape in a QTBT representation. The size of coding unit may (e.g., always) be a power of two (2), such as between four (4) to 128.

A CTU representation may have one or more (e.g., all) of the following characteristics: a variety of rectangular shapes for a coding unit; QTBT decomposition of a CTU may be multiple (e.g., two) stages; Luma and Chroma block partitioning structure may be separated and/or decided independently in intra slices; a CU may not be partitioned into predictions units or transform units; an additional CU split mode may be implemented.

QTBT decomposition of a CTU may be performed in one or multiple (e.g., two) stages. For example, a CTU may (e.g., first) be split in a quad-tree fashion and a (e.g., each) quad-tree leaf may be further divided in a binary fashion, as shown by example in FIG. 8. As shown in FIG. 8, solid lines may represent the quad-tree decomposition phase and dashed lines may represent the binary decomposition that is spatially embedded in the quad-tree leaves.

The Luma and Chroma block partitioning structure may be separated and/or decided independently in intra slices.

A CU may not be partitioned into predictions units or transform units. A (e.g., each) Coding Unit may be (e.g., systematically) made of a single prediction unit (e.g., previously 2Nx2N prediction unit partition type) and/or a single transform unit (e.g., no division into a transform tree).

A CU may not be partitioned into PUs or TUs for most coding units for most CU coding modes in one or more types of video coding. A (e.g., each) Coding Unit may be (e.g., systematically) made of a single prediction unit (e.g., 2Nx2N prediction unit partition type) and/or a single transform unit (e.g., no division into a transform tree). There may be exceptions. For example, one or more of the following PU or TU partitioning may apply for coding units in one or more (e.g., four (4)) coding modes. A CU (e.g., larger than 64 in width or height) may be tiled into a TU of size equal to the maximum supported transform size. The maximum transform size may be equal to 64, for example. An intra CU coded in intra sub-partition (ISP) mode may be split into two (2) or four (4) transform units, for example, depending on the type of ISP mode used and/or the shape of the CU. An inter CU coded in sub-block transform (SBT) mode may be split into two (2) transform units, where one of the resulting TUs may have residual data equal to zero. An inter CU coded in Triangle Prediction Merge (TPM) mode may be made of two (2) triangular prediction units, where each PU may be assigned its own motion data.

An additional CU split mode may be implemented, which may be referred to as the horizontal of vertical triple tree splitting mode. The CU split mode may include dividing a coding unit (CU) into three (3) sub-coding-units (sub-CUs), which may have respective sizes equal to ¼, ½ and ¼ of the parent CU size, e.g., in the direction of the considered spatial division.

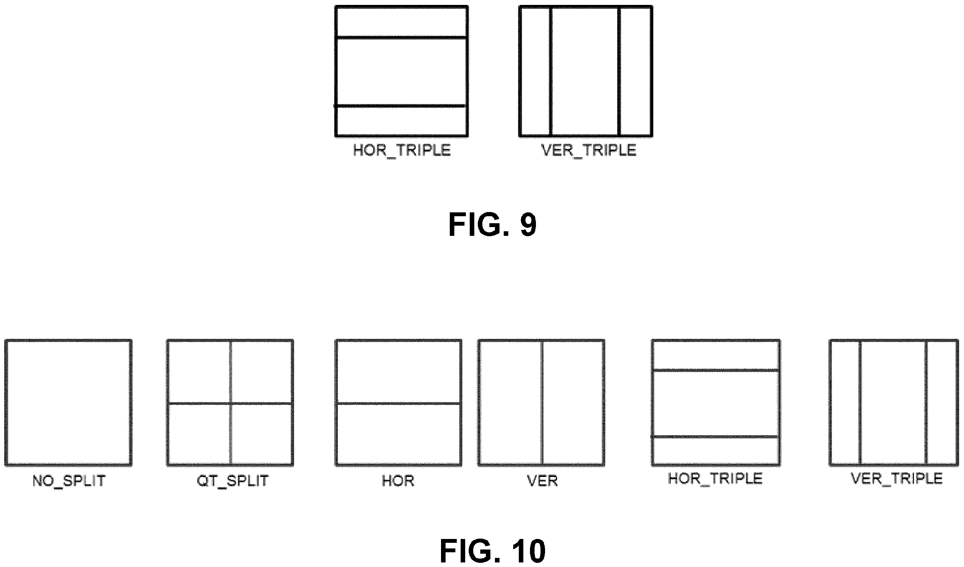

An example is illustrated in FIG. 9.

FIG. 9 illustrates an example of Horizontal (e.g., HOR_TRIPLE) and Vertical (e.g., VER_TRIPLE) Triple Tree Coding Unit splitting modes.

An example of a (e.g., complete) set of CU splitting modes present in a codec are shown in FIG. 10.

FIG. 10 illustrates an example of a set of Coding Unit splitting modes supported in video coding.

The dual tree concept may be extended to a block of intra samples in an inter slice, which may remove a limitation that an encoder cannot use all of the intra-coding tools in an inter-slice that are available in an intra-slice. Dual tree may provide (e.g., significant) coding efficiency improvement in the coding of intra slices. Temporal prediction may fail to efficiently predict one or more (e.g., some) parts of the current inter picture, for example, if/when the temporal distance between an inter slice and the reference picture is high. The encoder may (e.g., then) decide to code the region in intra mode. A separate tree representation (e.g., in that case) may (e.g., significantly) improve the compression efficiency for the intra spatial regions.

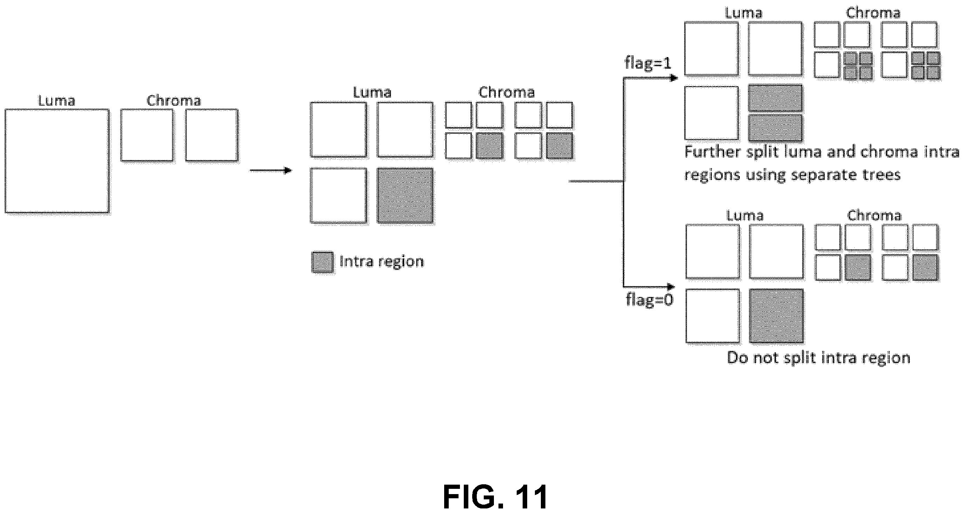

FIG. 11 illustrates an example showing separate tree signaling in inter slices.

Signaling of the presence of a separate tree may be accomplished, for example, with a combination of explicit signaling and inference. A dual tree may be inferred as present, for example, if/when the number of luma samples is large. A dual tree may be inferred as present, for example, if/when the number of luma samples is small. A flag in the bit-stream may (e.g., otherwise) indicate if a dual tree is present or not. The thresholds for what may be a large and small number of luma samples may be signaled in the Sequence Parameter Set (SPS). A flag may (e.g., also) be included in the SPS to indicate whether separate intra trees are enabled for Inter Slices.

Intra block copy coding may be performed. For example, intra block copy (IBC) is a tool that may be used for screen content coding. IBC may improve the coding efficiency of screen content materials. Block matching (BM) may be performed at the encoder to find a (e.g., an optimal) block vector or motion vector for a (e.g., each) CU, for example, since IBC mode is implemented as a block level coding mode. A block vector may indicate a displacement from the current block to a reference block, which is already reconstructed inside the current picture. The luma block vector of an IBC-coded CU may be in integer precision. The chroma block vector may round to integer precision. The IBC mode, e.g., when combined with adaptive motion vector resolution (AMVR), may switch between precisions (e.g., between 1-pel and 4-pel motion vector precisions). An IBC-coded CU may be treated as another (e.g., a third) prediction mode, e.g., other than intra or inter prediction modes. The IBC mode may be applicable, for example, to CUs with width and height smaller than or equal to 64 luma samples.

At CU level, IBC mode may be signaled with a flag. IBC mode may be signaled as IBC advanced motion vector prediction (AMVP) mode or IBC skip/merge mode. In an example of IBC skip/merge mode, a merge candidate index may be used to indicate which of the block vectors in the list from neighboring candidate IBC coded blocks is used to predict the current block. The merge list may include spatial, history-based motion vector prediction (HMVP), and/or pairwise candidates. In an example of IBC AMVP mode, a block vector difference may be coded in the same way as a motion vector difference. The block vector prediction method may use multiple (e.g., two) candidates as predictors, for example, one from a left neighbor and one from an above neighbor (e.g., if IBC coded). A default block vector may be used as a predictor, for example, if/when a neighbor is not available. An indication, such as a block vector predictor index indication, may be signaled to indicate the block vector predictor index.

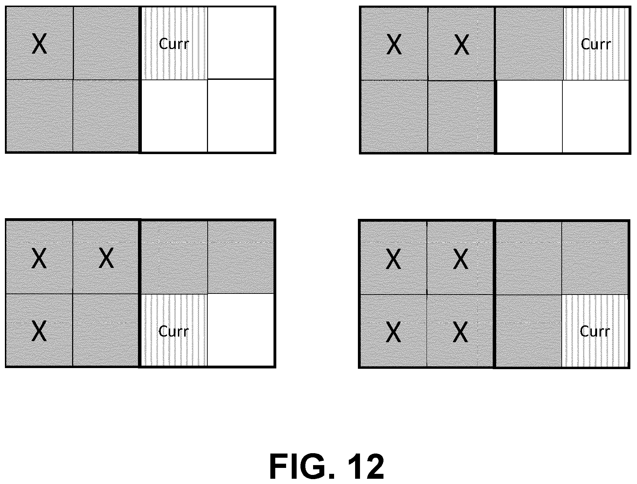

IBC reference region(s) may be identified. The IBC may allow (e.g., only) the reconstructed portion of the predefined area, e.g., including the region of the current CTU and at least a portion of a region of the left CTU, for example, to limit memory consumption and/or decoder complexity. FIG. 12 illustrates a reference region of IBC Mode. Each example block shown in FIG. 12 may represent a 64x64 luma sample unit. FIG. 12 illustrates an example of the current CTU processing order and the available reference samples in current and left CTU.

IBC reference region(s) may be identified based on the location of the current coding CU location within the current CTU.

For example, the current block processing may refer to the already reconstructed samples in the current CTU. The current block may refer to the reference samples in the bottom-right 64x64 blocks of the left CTU, e.g., IBC mode, for example, if the current block falls into the top-left 64x64 block of the current CTU. The current block may refer to the reference samples in the bottom-left 64x64 block of the left CTU and the reference samples in the top-right 64x64 block of the left CTU, e.g., using IBC mode.

For example, the current block processing may refer to the already reconstructed samples in the current CTU. The current block processing may refer to the reference samples in the bottom-left 64x64 block and bottom-right 64x64 block of the left CTU, e.g., using IBC mode, for example, if the current block falls into the top-right 64x64 block of the current CTU and if luma location (0, 64) relative to the current CTU has not yet been reconstructed. Otherwise, if luma location (0, 64) relative to the current CTU has been reconstructed, the current block can also refer to reference samples in the bottom-right 64x64 block of the left CTU.

Current block processing may refer to the already reconstructed samples in the current CTU. The current block may refer to the reference samples in the top-right 64x64 block and bottom-right 64x64 block of the left CTU, e.g., using IBC mode, for example, if the current block falls into the bottom-left 64x64 block of the current CTU and if luma location (64, 0) relative to the current CTU has not yet been reconstructed. Otherwise, if luma location (64, 0) relative to the current CTU has been reconstructed, the current block can also refer to the reference samples in the bottom-right 64x64 block of the left CTU, e.g., using IBC mode.

For example, the current block processing may (e.g., only) refer to the already reconstructed samples in the current CTU, e.g., using IBC mode, for example, if the current block falls into the bottom-right 64x64 block of the current CTU.

Restricting current block processing based on the location of the current coding CU location within the current CTU may allow the IBC mode to be implemented using local on-chip memory for hardware implementations.

IBC merge/advanced motion vector prediction (AMVP) list construction may be performed. An IBC merge/AMVP candidate may be inserted into the IBC merge/AMVP candidate list, for example, (e.g., only) if the IBC merge/AMVP candidate is valid. Above-right, bottom-left, and above-left spatial candidates, and a (e.g., one) pairwise average candidate may be added into the IBC merge/AMVP candidate list. Template based adaptive reordering of merge candidates (ARMC-TM) may be applied to an IBC merge list.

The history-based motion vector predictor (HMVP) table size for IBC may be, for example, 25 entries. Merge candidates may be reordered. For example, merge candidates may be reordered together after up to 20 IBC merge candidates are derived with full pruning. Candidates may be selected after reordering. For example, candidates (e.g., the first 6 candidates) with the lowest template matching costs may be selected as the final candidates in the IBC merge list.

The zero vectors' candidates to pad the IBC Merge/AMVP list may be replaced with a set of block vector prediction (BVP) candidates located in the IBC reference region. A zero vector may be deemed invalid as a block vector in IBC merge mode. An invalid block vector may be discarded as BVP in the IBC candidate list.

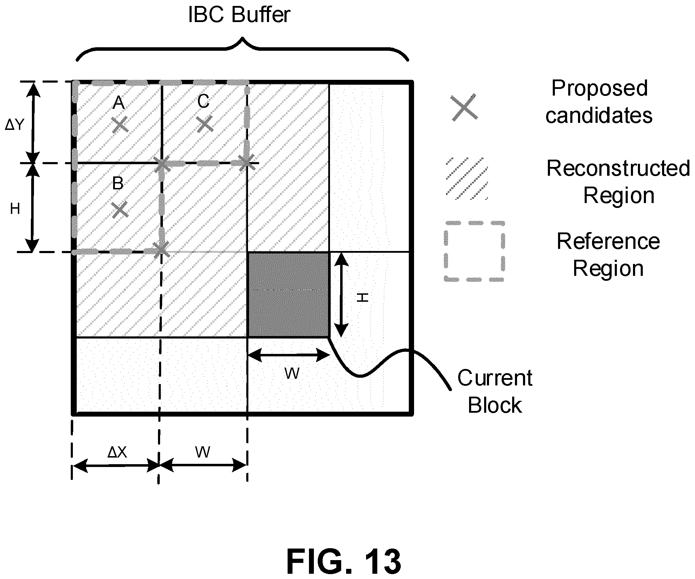

In examples, multiple (e.g., three) candidates may be located on the nearest corners of the reference region and multiple (e.g., three) additional candidates may be determined in the middle of the three sub-regions (A, B, and C), whose coordinates may be determined by the width and height of the current block and the $\Delta X$ and $\Delta Y$ parameters, as is depicted by example in FIG. 13. FIG. 13 illustrates an example of padding candidates for the replacement of the zero-vector in the IBC list.

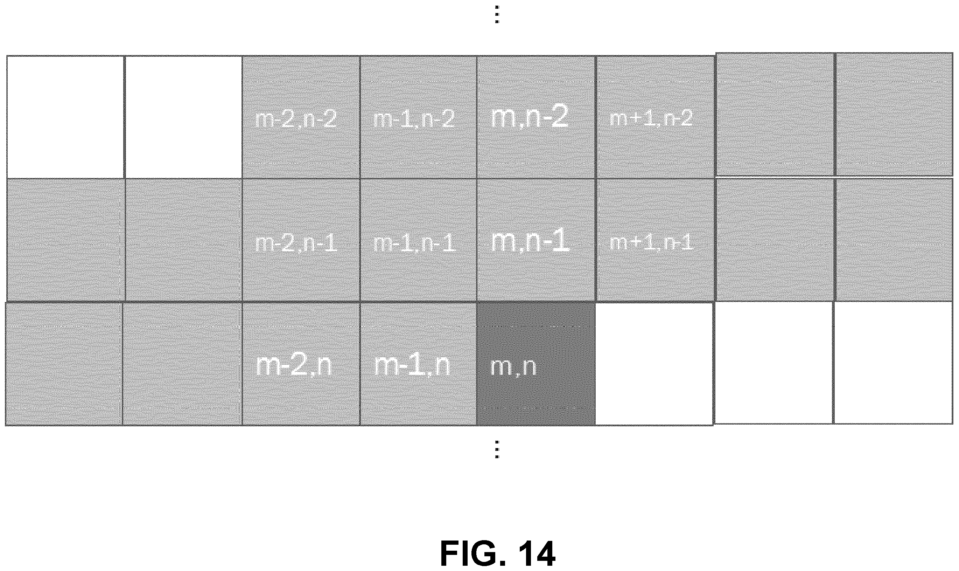

FIG. 14 illustrates an example of a reference region for IBC. An IBC reference region may include two CTU rows above the CTU being processed by the encoder or the decoder. FIG. 14 illustrates the reference area for coding a CTU (m,n). CTU (m,n) may be coded based on a reference area that includes CTUs with index (m-2,n-2)... (W,n-2),(0,n-1)...(W,n-1),(0,n)... (m,n). W may denote the maximum horizontal index within the current tile, slice, or picture. The per-sample block vector search (or local search) range may be limited, for example, to [-(C << 1), C >> 2] horizontally and [-C, C >> 2] vertically, e.g., to adapt to the reference area. C may denote the CTU size.

Intra block copy (IBC) may be implemented with template matching (TM). For example, template matching based motion search and refinement may be applied to IBC.

An IBC-TM merge mode may be used to implement IBC with template matching. An IBC-TM merge mode may involve a merge candidate list for Block Vector (BV) prediction, different from the candidate list used by IBC merge mode. The candidates may be selected according to a pruning method with a motion distance between the candidates, e.g., as in TM merge mode. The zero motion candidates may be replaced by (-W, 0), (0, -H), (-W, -H) MVs.

In IBC-TM merge mode, the selected candidates may be refined with template matching. An indication, such as a TM-merge flag, may be signaled to indicate the use of template matching merge IBC mode.

In an example IBC-TM AMVP mode, multiple (e.g., up to three (3)) candidates may be selected from the IBC-TM merge list. A (e.g., each) candidate may be refined, e.g., according to a (e.g., usual) template matching method. Refined candidates may be sorted according to their resulting TM cost.

TM refinement, e.g., when used for IBC, may be performed at integer pel position. TM refinement in IBC-TM AMVP mode may be performed at integer or 4-pel precision, for example, depending on the AMVR value. The refinement may be performed within the IBC reference area.

The interaction between IBC mode and inter coding tools, such as pairwise merge candidate, HMVP, combined intra/inter prediction mode (CIiP), merge mode with motion vector difference (MMVD), local illumination compensation (LIC) and geometric partitioning mode (GPM) may be as follows.

IBC may be used with pairwise merge candidate and HMVP. A pairwise IBC merge candidate may be generated by averaging two IBC merge candidates. For HMVP, IBC motion may be inserted into history buffer for (e.g., future) referencing.

IBC may not be used in combination with the following inter tools: affine motion. IBC may be used in combination with CIiP, MMVD, LIC, and GPM. IBC may not be allowed for the chroma coding blocks when DUAL_TREE partition is used.

The current picture may not be included as one of the reference pictures in the reference picture list 0 for IBC prediction. The derivation process of motion vectors for IBC mode may exclude neighboring blocks (e.g., all neighboring blocks) in inter mode and vice versa. The following IBC design examples may be applied.

IBC may share a process with MV merge including with a pairwise merge candidate and HMVP and may disallow temporal motion vector predictor (TMVP) and zero vector because TMVP and zero vector may be invalid for IBC mode.

A separate HMVP buffer (e.g., five (5) candidates each) may be used for MV and IBC. Block vector constraints may be implemented (e.g., in the form of bitstream conformance constraint). A device (e.g., encoder) may ensure that no invalid vectors are present in the bit-stream and/or that merge may be refrained from being used (e.g., may not be used) if the merge candidate is invalid (e.g., out of range or 0). The bitstream conformance constraint may be expressed in terms of a virtual buffer (e.g., as described herein). For deblocking, IBC may be handled as inter mode. If the current block is coded using IBC prediction mode, AMVR may not use quarter-pel nor half-pel. AMVR may be signaled to indicate whether MV is inter-pel or 4 integer-pel. The number of IBC merge candidates may be signaled in the slice header separately from the numbers of regular, subblock, and geometric merge candidates.

IBC merge mode with block vector differences (IBC-MBVD) may be performed and/or provided.

The Merge with Motion vector Difference (MMVD), which may be used in inter-predicted blocks, may include one or more of the following features and/or details.

Affine-MMVD and GPM-MMVD may be used as an extension of regular MMVD mode. MMVD mode may be extended to the IBC merge mode.

In the IBC-MBVD, a motion vector difference the distance set may be {1-pel, 2-pel, 4-pel, 8-pel, 12-pel, 16-pel, 24-pel, 32-pel, 40-pel, 48-pel, 56-pel, 64-pel, 72-pel, 80-pel, 88-pel, 96-pel, 104-pel, 112-pel, 120-pel, 128-pel}. The BVD directions may include horizontal (e.g., two horizontal) and vertical (e.g., two vertical) directions.

The base candidates may be selected from a number of candidates (e.g., the first five candidates) in a reordered IBC merge list. The possible (e.g., all the possible) MBVD refinement positions (20×4) for a (e.g., each) base candidate may be reordered, for example, based on the SAD cost between the template (e.g., one row above and one column left to the current block) and/or its reference for each refinement position. A number of refinement positions (e.g., the top 8 refinement positions) with the lowest template SAD costs may be kept as available positions, for example, consequently for MBVD index coding. The MBVD index may be binarized by the rice code (e.g., with the parameter equal to 1).

Intra template matching prediction (IntraTMP) may copy a prediction block (e.g., the best prediction block) from the reconstructed part of a current picture or frame based on a determination that an L-shaped template associated with the prediction block matches a current template (e.g., an L-shaped template associated with a current block). For a predefined search range, an encoder may search for the most similar template to the current template in the reconstructed part of the current frame and may use the corresponding block as the prediction block. The encoder may signal the use of IntraTMP, and a decoder may perform the same (e.g., similar) operations as those performed by the encoder.

With IntraTMP, a prediction signal may be generated by matching the L-shaped, top-only, or left-only causal neighbor of the current block with another block in a predefined search area, as depicted in FIG. 8. Multiple (e.g., 6) predefined search areas may be used for an IntraTMP search, such as, for example, R1 to R6 in FIG. 8, which may include reconstructed samples from the top and left CTUs as well as part of the reconstructed samples within the current CTU that may be located in the above, left, bottom-left and top-right neighboring areas of the current block.

A sum of absolute differences (SAD) may be used as a cost function for an IntraTMP search. The predefined search areas may be searched in a certain order, such as, for example, in the order of R4, R5, R6, R1, R2, and R3 shown in FIG. 8. Within each search area or region, a decoder may construct a candidate list of (e.g., up to 19) template matching block vectors (BVs), which may be ranked in an ascending order according to template costs (e.g., SAD). One or more of the following modes may be supported. In a single predictor mode, a single predictor may be selected from the candidate list. In a fusion of multiple predictors mode, multiple predictors may be blended to derive a final prediction block. The blending may be performed based on weights that may be computed from the template matching cost of each predictor, using a Wiener-filter based weight derivation method, etc. In a sub-pel precision mode, if a single predictor is used, sub-pel precision (e.g., 1/2-pel precision, 1/4-pel precision, and/or 3/4-pel precision) may be used, each with multiple (e.g., 8) possible directions. In a linear filter model, a linear filter may be learned between a reference template and the current template, and applied to the reference block. In examples, the linear filter model mode may be used for a single predictor (e.g., if sub-pel precision is not used).

The dimensions of each search region (SearchRange_w, SearchRange_h) may be set proportional to the block dimension (BlkW, BlkH) to have a fixed number of SAD comparisons per pixel. This may be illustrated by the following formula:

$$SearchRange\_w = min(64, a * BlkW)$$

$$SearchRange\_h = min(64, a * BlkH)$$

where "a" may a constant used to control a gain/complexity trade-off. In examples, "a" may be set equal to 5.

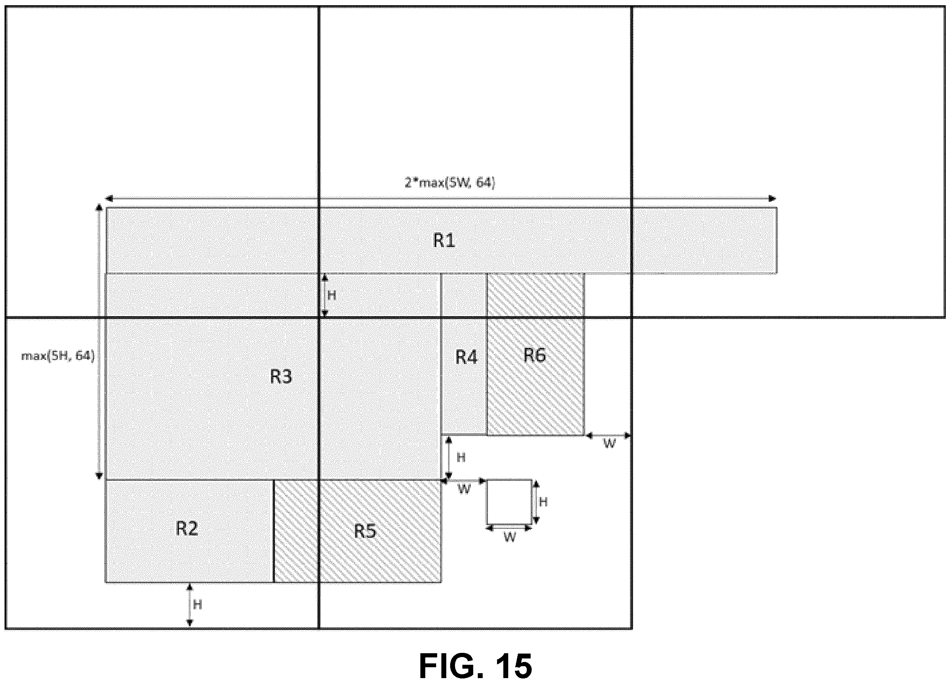

FIG. 15 illustrates an example of an intra template matching search area.

Within IntraTMP, the search range of one or more (e.g., all) search regions may be subsampled (e.g., by a factor of 3), for example, to speed up the template matching process. After finding a match (e.g., a best match) based on the sub-sampling (e.g., via a sparse search), a refinement process may be performed, for example, via a second template matching search around the match within a reduced range.

IntraTMP may be enabled for CUs with a size less than or equal to 64 pixels in width and height. The maximum CU size that qualifies for IntraTMP may be configurable. The use of IntraTMP may be signaled (e.g., at the CU level), for example, via a dedicated flag (e.g., if DIMD is not used for a current CU).

IntraTMP may be based on a linear filter model (e.g., Intra TMP-FLM prediction mode).

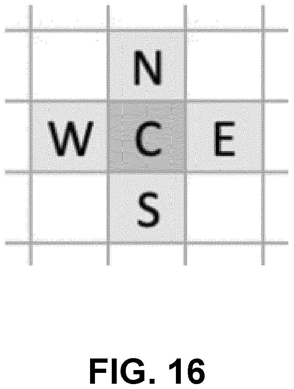

IntraTMP may be used in combination with convolution filtering. For example, a 6-tap filter, which may include a 5-tap plus sign shape spatial component (e.g., as shown in FIG. 16) and a bias term, may be adaptively used to enhance the Intra TMP block prediction. As shown in FIG. 16, the input to the spatial 5-tap component of the filter may include, for example, a center C sample in the reference block, which may be at corresponding locations with the sample in the current block to be predicted, and above/north (N), below/south (S), left/west (W), and right/east (E) neighbors.

FIG. 16 illustrates an example of the spatial part of a filter.

A bias term B may represent a scalar offset between the input and output. The bias term B may be set to a middle luma value (e.g., 512 for 10-bit content).

Output of the filter may be calculated, for example, as follows:

$$predLumaVal = c0C + c1N + c2S + c3E + c4W + c5B$$

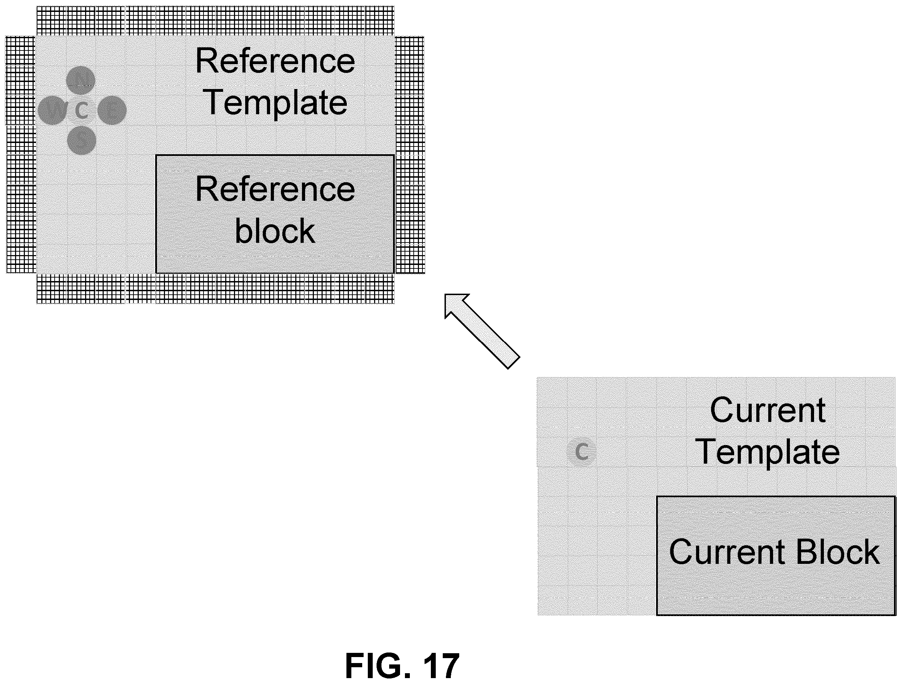

The filter coefficients $c_i$ may be calculated, for example, by minimizing the mean squared error (MSE) between the reference template and current template, as shown in FIG. 17. Template sizes and shapes may be, for example, the same as in intraTMP. The template size used for training may be, for example, four (4) lines above and to the left of the current block, e.g., depending on their availability. The extensions to the area shown in hatching may (e.g., be needed to) support the "side samples" of the plus shaped spatial filter. The extensions may be padded, for example, when in unavailable areas.

FIG. 17 illustrates an example of a reference area that may be used to derive filter coefficients.

Usage of the intra TMP-FLM mode may be signaled, for example, as a coded CU level flag. Intra TMP-FLM may be considered a sub-mode of Intra TMP. For example, the Intra TMP-FLM flag may be signalled (e.g., only) if the Intra TMP flag is true.

A filtering method may include applying the linear filter model to IBC predicted blocks.

The filtered mode may be used as a mode (e.g., an additional mode) for non-merge IBC blocks. In some examples (e.g., for non-merge blocks), the filtered mode may not be applied together with IBC-LIC, IBC-CIIP, and/or RR-IBC. In some examples (e.g., for IBC merge modes), the filtering mode may be inherited if/when the merge mode list is constructed, e.g., to avoid additional/extra signaling.

Adaptive usage of the LIC of a linear filter model for an IBC predicted block, e.g., together with block-level signaling of the prediction mode used, may lead to increased compression performance of a video codec.

The Intra TMP prediction mode may combine usage of Intra TMP with the linear filter model.

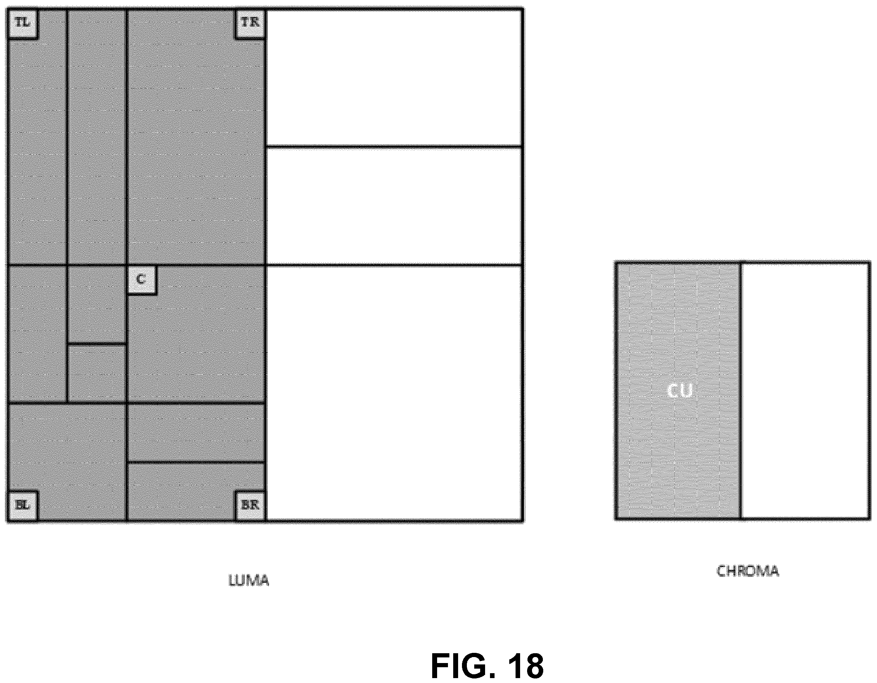

A direct block vector (DBV) may be used for chroma blocks. A flag may be signaled to indicate whether a chroma block is coded using IBC mode. A (e.g., one) luma block, e.g., in one of the five locations shown in FIG. 18, may be coded with IBC or IntraTMP mode. A block vector of the luma block (e.g., coded with IBC or IntraTMP mode) may be scaled and used as block vector for the chroma block. Template matching may be used to perform block vector scaling.

FIG. 18 illustrates an example of Luma blocks that may be used to derive a direct block vector.

In some examples (e.g., for chroma block coded in dual tree), chroma DBV may be available. Chroma DBV may be signaled, for example, if a block-vector-based coded luma block is available, e.g., at any of the five (5) spatial locations shown by FIG. 18.

In some examples (e.g., for chroma blocks coded in single tree), chroma DBV coding may be allowed for a chroma block (PU) if the associated luma block is in Intra-TMP or IBC coding mode, e.g., it has an associated block vector. The DBV mode may be disabled if/when there is no block vector from the collocated luma block, for example, such as if/when a luma component is not coded by IntraTMP or IBC. A template matching based refinement process in DBV mode may (e.g., also) be removed, for example, if/when there is no block vector from the collocated luma block.

Video coding may be improved, for example, by improving compression efficiency, e.g., compared to existing video compression systems. For example, compression efficiency may be improved by introducing an adaptive dual (e.g., or separate) coding tree into a video codec. Technical issues may arise when jointly using adaptive single/dual-tree selection for intra regions in inter slices with a chromaDBV prediction mode (e.g., as described herein). The use of the tools may be combined to promote (e.g., good) compression efficiency.

Adaptive dual-tree coding may be supported in the context of a video codec. Adaptations may synergize coding tools with selective usage of dual-tree at coding tree node level.

ChromaDBV coding mode management may be implemented to switch to a dual-tree based policy for the enabling of chromaDBV prediction mode, for example, if/when local dual tree is on, which may impact in the decoding of the intra chroma prediction mode.

BV information of a chroma block may be derived, for example, if/when local dual tree is on (e.g., for intra slices entirely coded in dual tree mode). A chromaDBV mode enabled in single tree may be used for a chroma block in single tree in inter slices.

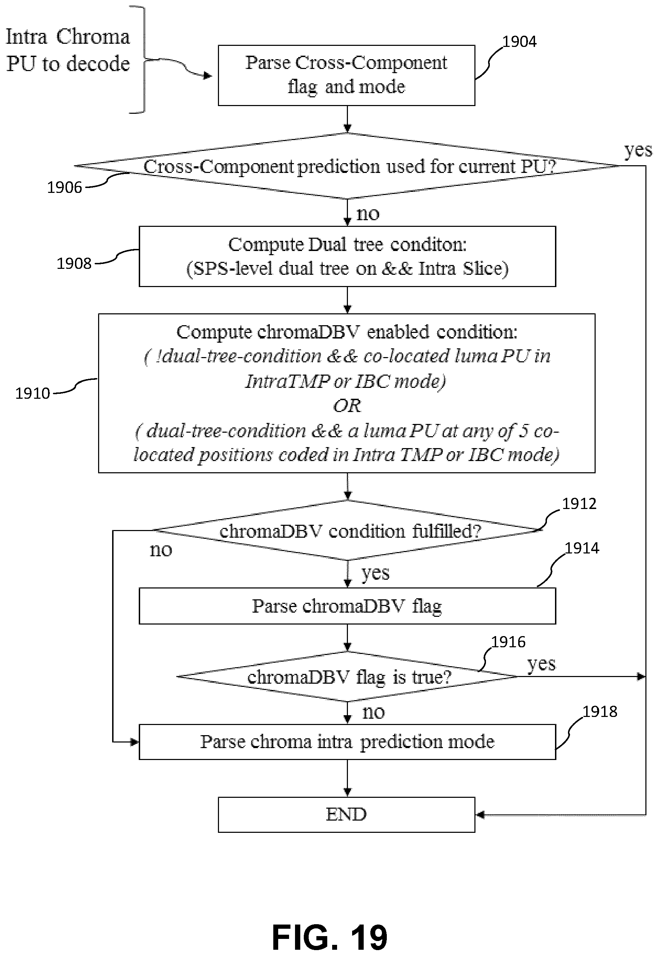

FIG. 19 illustrates a flowchart showing an example of a process that may be used for decoding the intra mode of an intra chroma PU. As shown in FIG. 19, the input to the process may be an intra chroma PU to decode.

At 1904, a decoder may parse the cross-component (CC) prediction flag and (e.g., if the flag is true) the cross-component prediction mode of the current chroma PU.

At 1906, the decoder may determine whether cross-component prediction is used for the current PU, e.g., based on the CC prediction mode. If the current chroma PU employs a CC prediction mode, the process may end.

At 1908 (e.g., if the CC prediction mode is not used for the current chroma PU), the decoder may compute the dual-tree use condition for the current chroma PU. The condition may not depend on the PU itself, but may depend on the Sequence Parameter Set (SPS) and the slice type. A dual-tree condition may be fulfilled, for example, if the SPS-level flag indicates that dual-tree is used in intra slices is true and if the current slice type is Intra. Otherwise, the dual tree condition may be false.

At 1910, the decoder may compute the condition to enable chromaDBV mode for current intra chroma PU. The chromaDBV enabling condition may be true, for example, if any of the following conditions is true (e.g., and may be false if all of the following conditions are false): the dual-tree condition is false (e.g., chroma PU is in single tree mode) and the co-located luma PU is coded in IBC or IntraTMP mode; and/or the dual-tree condition is true (e.g., chroma PU is in dual tree mode) and any of the luma PUs co-located with the five (5) spatial positions shown in FIG. 18 is true.

At 1912, the decoder may determine whether the chromaDBV condition is fulfilled. The process may end if the chromaDBV condition is not fulfilled.

At 1914 (e.g., if the chroma DBV condition is fulfilled), the decoder may parse the chromaDBV flag for the current chroma PU.

At 1916, the decoder may determine whether the chromaDBV flag is true. The process may end if the chromaDBV flag is true, e.g., because it indicates the chroma PU is in chromaDBV mode.

At 1918 (e.g., if the chromaDBV flag is false), the decoder may parse the chroma intra mode for the current intra chroma PU.

One or more of the following may be applied regarding the block derivation for the current chroma PU: the BV of current chroma PU may be derived as the BV of the co-located IBC or ITMP luma PU (e.g., possibly rescaled according to chroma format (444, 422, or 420)), for example, if the chroma PU is in single tree mode; and/or the BV from the (e.g., first) luma PU found when visiting positions shown in FIG. 18 may be selected and/or re-scaled to chroma component resolution (e.g., based on chroma format used), for example, if the chroma PU is in dual-tree mode.

FIG. 19 illustrates a flowchart showing an example of a process that a decoder may use to decode the intra prediction mode of a chroma PU.

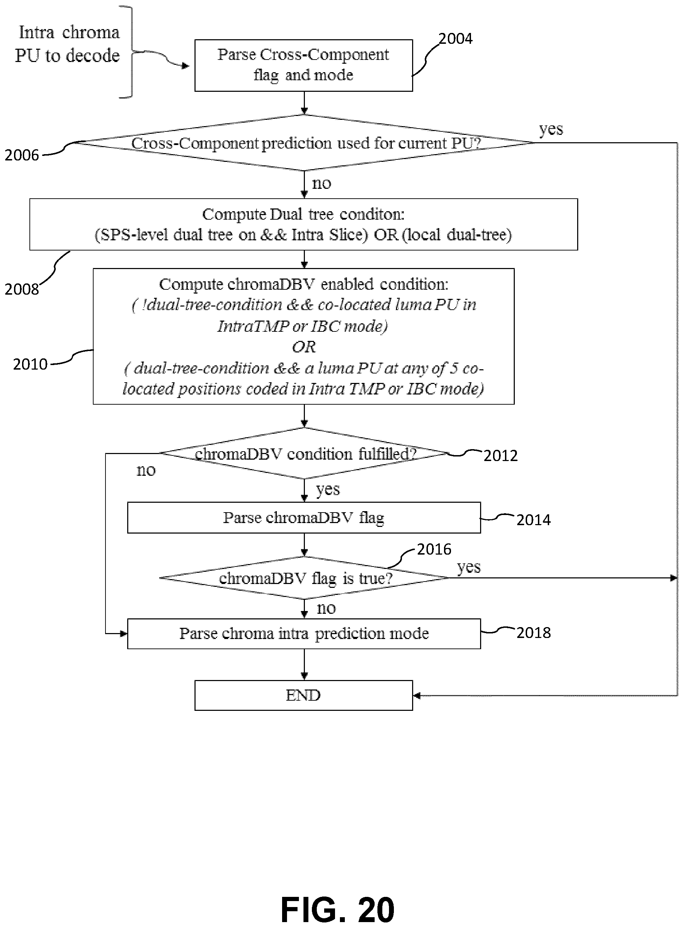

An example of interaction between Chroma DBV prediction mode and adaptive dual-tree coding in inter slices is shown in FIG. 20.

FIG. 20 illustrates a flowchart showing an example of a process that may be used by a decoder to decode the chroma prediction mode of an intra chroma PU.

The example process shown in FIG. 20 may differ from the process shown in FIG. 19, for example, (e.g., at least) in the computation of the dual-tree condition.

As shown in FIG. 20, at 2008, a decoder may compute the dual-tree condition associated with a current intra chroma PU, for example, as follows. The decoder may set the dual-tree condition for current intra chroma PU to true, for example, if one or more of the following conditions is true (e.g., or may set to false if all the conditions are false): the slice is an intra slice and usage of dual tree for intra slice is activated at SPS level; and/or the chroma CB belongs to a spatial region coded in intra mode and where dual tree is used.

In examples, the remaining intra chroma mode decoding operations at 2004, 2006, 2010, 2012, 2014, 2016, 2018 may be the same or similar to operations at 1904, 1906, 1910, 1912, 1914, 1916, and 1918.

FIG. 20 illustrates a flowchart showing an example process that a decoder may use to decode intra chroma mode when local-dual tree is enabled.

A BV of an intra chroma PU may be derived, for example, as shown in FIG. 20 with the computation of the dual-tree condition shown at 2008.

One or more of the following may apply, for example, if the current chroma PU is in chromaDBV prediction mode: the BV of the current chroma PU may be derived as the BV of the co-located IBC or ITMP luma PU (e.g., possibly rescaled according to chroma format (444, 422 or 420)), for example, if the dual-tree condition is false for the considered intra chroma PU; and/or the BV from the (e.g., first) luma PU found when visiting positions shown in FIG. 18 may be selected and/or re-scaled to chroma component resolution (e.g., based on chroma format used), for example, if the dual-tree condition is true for the considered intra chroma PU.

In some examples (e.g., for chroma PU in local dual-tree mode), candidate co-located luma positions may be considered in (e.g., all) the enclosing intra dual-tree region of the current PU.

One or more of the following may be applied, for example, if/when a chroma PU is in an inter-slice and is in local dual-tree mode.

As shown in FIG. 18, (e.g., all) the luma positions considered for enabling chroma DBV and deriving the chroma BV may be inside the co-located luma area of current chroma PU area.

For example, the spatial area to look for a luma PU coded in IBC or Intra TMP mode (e.g., illustrated by FIG. 18) may be extended, for example, to the boundaries of the intra region coded in dual-tree mode that encloses the current considered chroma PU.

The intra region may be determined, for example, as described herein. A chroma PU in local dual tree mode may have some associated local dual tree information, which may identify a coding tree node as the root of the considered local dual tree. The coding tree node may be identified, for example, based on the quad-tree depth and/or multi-type tree (MTT) depth values that may be associated with the local dual tree root. A (e.g., each) PU, e.g., in single or dual tree or local dual tree, may be associated with a series of split modes that led to the current chroma block (e.g., CU containing considered chroma PU) by recursively splitting the enclosing CTU. A computation may determine the spatial region in the current CTU that may be associated with the coding tree node that may be the root of the current considered local dual coding tree including the current chroma PU. The spatial dual tree region may be computed.

The intra dual-tree enclosing region associated with the current chroma PU may be known, e.g., based on the computation(s). The spatial luma position of FIG. 18 that may be located within the region may be considered as candidates for providing the BV of the current chroma PU and/or for enabling the chromaDBV mode for current chroma PU.

The region where the luma co-located position may be considered for enabling chroma DBV and/or for deriving chroma BV may (e.g., alternatively) be defined, for example, according to the current chroma PU area and/or according to the intra dual-tree region that encloses current chroma PU. A spatial area larger than the current chroma PU and inside the enclosing intra dual-tree region may be determined, for example, if the current chroma PU is smaller than a (pre)defined area threshold. Luma BV-based blocks may (e.g., then) be searched in the co-located luma area of the determined chroma area. Conversely, (e.g., only) luma positions within the luma area co-located to the current chroma PU may be considered, for example, if the current chroma PU is larger or equal to the considered chroma area threshold.

In some examples (e.g., for chroma PU in local dual-tree mode), co-located luma BV candidates and (e.g., also) chroma BV candidates within the enclosing intra dual-tree region of current PU may be considered.

For example, enabling chromaDBV and/or deriving the chroma BV of a chroma PU in local dual-tree mode may consider (e.g., take into account) co-located luma PUs and (e.g., also) chroma PUs located within the (e.g., same) enclosing intra dual-tree region.

In examples, for a given chroma PU, chromaDBV enabling conditions may consider the co-located luma PUs, and (e.g., also) the chroma PUs that may already be coded and located within the (e.g., same) enclosing intra dual-tree region as the current chroma PU.

ChromaDBV may be allowed for a current chroma PU, for example, if a co-located luma PU is in IntraTMP or IBC mode, or if a previous chroma PU in the same dual-tree region is in chromaDBV mode.

The derivation of the current chroma PU in local-dual tree mode may be performed, for example, according to co-located luma PUs of the current chroma PU and chroma PUs that may already be coded and located inside the (e.g., same) intra dual-tree region as the current chroma PU.

In examples, a position (e.g., the first position) among co-located luma PUs and preceding chroma PUs in the same dual-tree region, where a BV is available, may be selected. The BV found at the position may be selected as the BV of the current chroma PU in dual-tree mode. The BV may (e.g., then) be refined, e.g., based on a template matching cost minimization basis. The (e.g., refined) BV may be used to predict the current chroma PU.

In some examples (e.g., if/when an intra region is coded in dual-tree mode), the enabling of chromaDBV may be determined for the (e.g., whole) region. One or more BV predictors may be derived for (e.g., all) chroma PUs in the intra region.

In examples, the enabling of chromaDBV mode and/or the derivation of at least one BV predictor for chroma may be performed at the level of an (e.g., a whole) intra region coded in dual-tree, e.g., rather than at chroma PU level.

A decoder may compute the chromaDBV enabling condition for the (e.g., full) considered spatial intra chroma region, for example, if/when a spatial region is signaled as being coded in intra and in dual-tree mode. Co-located luma positions (e.g., similar to those shown in FIG. 18) may be (e.g., successively) considered to find a BV-based coded luma PU. The positions may be determined in the (e.g., full) intra region being coded in dual-tree mode, for example, as opposed to looking for a luma position within the luma area co-located to a particular chroma PU.

A decoder may determine whether a dual tree mode is enabled for a chroma prediction unit (PU) in a coding tree unit (CTU) based on a determination of whether a local dual tree condition is satisfied, wherein the local dual tree condition comprises that the chroma PU is in an intra-predicted region for which the dual tree mode is enabled, obtain a luma PU collocated with the chroma PU, and, based on a satisfaction of the local dual tree condition and a determination that a sample at a location associated with the luma PU is reconstructed using a block vector (BV) associated with the luma PU, parse a direct block vector (DBV) indicator for the chroma PU. Decoding tools and techniques (e.g., as illustrated in FIG. 3) including, for example, one or more of entropy decoding, inverse quantization, inverse transformation, and differential decoding may be used to enable one or more examples as described herein in a decoder. For example, these decoding tools and techniques may be used to enable one or more of: determining whether a dual tree mode is enabled for a chroma prediction unit (PU) in a coding tree unit (CTU) based on a determination of whether a dual tree condition (e.g., a local dual tree condition) is satisfied; determining that the chroma PU is in an intra-predicted region for which the dual tree mode is enabled; determining that the intra-predicted region is smaller than an area of the CTU; obtaining a luma PU collocated with the chroma PU; determining a satisfaction of a local dual tree condition; based on a satisfaction of the dual tree condition (e.g., the local dual tree condition) and a determination that a sample at a location associated with the luma PU is reconstructed using a block vector (BV) associated with the luma PU, parsing a direct block vector (DBV) indicator for the chroma PU; predicting the chroma PU based on the DBV indicator; decoding the CTU based on the predicted chroma PU; selecting one of a plurality of predetermined locations associated with a luma component of a current picture; determining that cross-component prediction is not enabled for the chroma PU; obtaining a slice comprising the chroma PU; determining that the slice is not an intra slice; determining that a sequence parameter set indicator indicative of an enablement of the dual tree mode is not received; determining the BV associated with intra block copy (IBC) or intra template matching prediction (intra TMP); determining the location inside an area collocated with an area of the chroma PU; obtaining a slice comprising the chroma PU; determining that the slice is an inter slice and a local dual tree mode is enabled for the chroma PU; determining the location associated with the luma PU may be determined using a boundary of the intra-predicted region (e.g., for example, the intra-predicted region may be in the CTU and comprise the chroma PU); determining a multiple type tree (MTT) partition depth associated with the local dual tree mode; determining the intra-predicted region in the CTU based on the MTT partition depth; determining that, in the local dual tree mode, the dual tree mode may not be enabled for an entirety of the CTU and/or the dual tree mode may be enabled for the intra-predicted region in the CTU; obtaining a decoded chroma PU in the intra-predicted region; determining that the decoded chroma PU is decoded using DBV; parsing the DBV indicator for the chroma PU based on the determination that the decoded chroma PU is decoded using DBV; determining DBV is enabled for the intra-predicted region; predicting a chroma component associated with the intra-predicted region using DBV; decoding the CTU based on the predicted chroma component associated with the intra-predicted region; etc.

An encoder may determine whether a dual tree mode is enabled for a chroma prediction unit (PU) in a coding tree unit (CTU) based on a determination of whether a local dual tree condition is satisfied, wherein the local dual tree condition comprises that the chroma PU is in an intra-predicted region for which the dual tree mode is enabled, obtain a luma PU collocated with the chroma PU, and, based on a satisfaction of the local dual tree condition and a determination that a sample at a location associated with the luma PU is reconstructed using a block vector (BV) associated with the luma PU, second a direct block vector (DBV) indicator for the chroma PU. Encoding tools and techniques (e.g., as illustrated in FIG. 2) including one or more of quantization, entropy coding, inverse quantization, inverse transformation, and differential coding may be used to enable one or more examples as described herein in the encoder. For example, these encoding tools and techniques may be used to enable one or more of: determining whether a dual tree mode is enabled for a chroma prediction unit (PU) in a coding tree unit (CTU) based on a determination of whether a dual tree condition (e.g., a local dual tree condition) is satisfied; determining that the chroma PU is in an intra-predicted region for which the dual tree mode is enabled; determining that the intra-predicted region is smaller than an area of the CTU; obtaining a luma PU collocated with the chroma PU; determining a satisfaction of a local dual tree condition; based on a satisfaction of the dual tree condition (e.g., the local dual tree condition) and a determination that a sample at a location associated with the luma PU is reconstructed using a block vector (BV) associated with the luma PU, sending a direct block vector (DBV) indicator for the chroma PU; predicting the chroma PU based on the DBV indicator; encoding the CTU based on the predicted chroma PU; selecting one of a plurality of predetermined locations associated with a luma component of a current picture; determining that cross-component prediction is not enabled for the chroma PU; obtaining a slice comprising the chroma PU; determining that the slice is not an intra slice; determining that a sequence parameter set indicator indicative of an enablement of the dual tree mode is not received; determining the BV associated with intra block copy (IBC) or intra template matching prediction (intra TMP); determining the location inside an area collocated with an area of the chroma PU; obtaining a slice comprising the chroma PU; determining that the slice is an inter slice and a local dual tree mode is enabled for the chroma PU; determining the location associated with the luma PU may be determined using a boundary of the intra-predicted region (e.g., for example, the intra-predicted region may be in the CTU and comprise the chroma PU); determining a multiple type tree (MTT) partition depth associated with the local dual tree mode; determining the intra-predicted region in the CTU based on the MTT partition depth; determining that, in the local dual tree mode, the dual tree mode may not be enabled for an entirety of the CTU and/or the dual tree mode may be enabled for the intra-predicted region in the CTU; obtaining a encoded chroma PU in the intra-predicted region; determining that the encoded chroma PU is encoded using DBV; sending the DBV indicator for the chroma PU based on the determination that the encoded chroma PU is encoded using DBV; determining DBV is enabled for the intra-predicted region; predicting a chroma component associated with the intra-predicted region using DBV; encoding the CTU based on the predicted chroma component associated with the intra-predicted region; etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A device for video decoding, comprising:
   a processor configured to:

   determine whether a dual tree mode is enabled for a chroma prediction unit (PU) in a coding tree unit (CTU) based on a determination of whether a local dual tree condition is satisfied, wherein the local dual tree condition is that the chroma PU is in an intra-predicted region for which a dual tree mode is enabled, and wherein the intra-predicted region is smaller than an area of the CTU;
   obtain a luma PU collocated with the chroma PU;
   based on a satisfaction of the local dual tree condition and a determination that a sample at a location associated with the luma PU is reconstructed using a block vector (BV) associated with the luma PU, parse a direct block vector (DBV) indicator for the chroma PU;
   predict the chroma PU based on the DBV indicator; and
   decode the CTU based on the predicted chroma PU.

2. The device of claim 1, wherein the location associated with the luma PU is one of a plurality of predetermined locations associated with a luma component of a current picture, and the processor is further configured to:

   determine that cross-component prediction is not enabled for the chroma PU;
   obtain a slice comprising the chroma PU;
   determine a satisfaction of the local dual tree condition; and
   determine that the slice is not an intra slice.

3. The device of claim 1, wherein the BV is associated with intra block copy (IBC) or intra template matching prediction (intra TMP).

4. The device of claim 1, wherein the location associated with the luma PU is inside an area collocated with an area of the chroma PU.

5. The device of claim 1, wherein the processor is further configured to:

   obtain a slice comprising the chroma PU; and
   determine that the slice is an inter slice and a local dual tree mode is enabled for the chroma PU, wherein the location associated with the luma PU is determined using a boundary of the intra-predicted region, and wherein the intra-predicted region is in the CTU and comprises the chroma PU.

6. The device of claim 5, wherein the processor is further configured to determine a multiple type tree (MTT) partition depth associated with the local dual tree mode, and wherein the intra-predicted region in the CTU is determined further based on the MTT partition depth.

7. The device of claim 5, wherein, in the local dual tree mode, the dual tree mode is not enabled for an entirety of the CTU, and the dual tree mode is enabled for the intra-predicted region in the CTU.

8. The device of claim 1, wherein the processor is further configured to:

   obtain a decoded chroma PU in the intra-predicted region; and
   determine that the decoded chroma PU is decoded using DBV, wherein the DBV indicator for the chroma PU is parsed based on the determination that the decoded chroma PU is decoded using DBV.

9. The device of claim 1, wherein the processor is further configured to:

   determine DBV is enabled for the intra-predicted region; and
   predict a chroma component associated with the intra-predicted region using DBV, wherein the CTU is decoded based on the predicted chroma component associated with the intra-predicted region.

10. A method for video decoding, comprising:

    determining whether a dual tree mode is enabled for a chroma prediction unit (PU) in a coding tree unit (CTU) based on a determination of whether a local dual tree condition is satisfied, wherein the local dual tree condition is that the chroma PU is in an intra-predicted region for which the dual tree mode is enabled, and wherein the intra predicted region is smaller than an area of the CTU;
    obtaining a luma PU collocated with the chroma PU;
    based on a satisfaction of the local dual tree condition and a determination that a sample at a location associated with the luma PU is reconstructed using a block vector (BV) associated with the luma PU, parsing a direct block vector (DBV) indicator for the chroma PU;
    predicting the chroma PU based on the DBV indicator; and
    decoding the CTU based on the predicted chroma PU.

11. The method of claim 10, wherein the location associated with the luma PU is one of a plurality of predetermined locations in the luma PU, and the method further comprises:

    determining that cross-component prediction is not enabled for the chroma PU;
    obtaining a slice comprising the chroma PU;
    determine a satisfaction of the local dual tree condition; and
    determining that the slice is not an intra slice.

12. The method of claim 10, further comprises:

    obtaining a slice comprising the chroma PU; and
    determining that the slice is an inter slice and a local dual tree mode is enabled for the chroma PU, wherein the location associated with the luma PU is determined using a boundary of the intra-predicted region, and wherein the intra-predicted region is in the CTU and comprises the chroma PU.

13. The method of claim 12, wherein, in the local dual tree mode, the dual tree mode is not enabled for an entirety of the CTU, and the dual tree mode is enabled for the intra-predicted region in the CTU.

14. The method of claim 10, further comprises:

    obtaining a decoded chroma PU in the intra-predicted region; and
    determining that the decoded chroma PU is decoded using DBV, wherein the DBV indicator for the chroma PU is parsed based on the determination that the decoded chroma PU is decoded using DBV.

15. The method of claim 10, further comprises:

    determining DBV is enabled for the intra-predicted region; and
    predicting a chroma component associated with the intra-predicted region using DBV, wherein the CTU is decoded based on the predicted chroma component associated with the intra-predicted region.

**FIG. 1A**

**FIG. 1B**

**FIG. 1C**

EP 4 633 142 A1

**FIG. 1D**

EP 4 633 142 A1

FIG. 2

**300**

FIG. 3

EP 4 633 142 A1

**400**

FIG. 4

**FIG. 5**

FIG. 6

**FIG. 7**

**FIG. 8**

**FIG. 9**

**FIG. 10**

**FIG. 11**

EP 4 633 142 A1

**FIG. 12**

FIG. 13

EP 4 633 142 A1

⋮

|  |  | m-2,n-2 | m-1,n-2 | m,n-2 | m+1,n-2 |  |  |
|  |  | m-2,n-1 | m-1,n-1 | m,n-1 | m+1,n-1 |  |  |
|  |  | m-2,n | m-1,n | m,n |  |  |  |

⋮

**FIG. 14**

**FIG. 15**

**FIG. 16**

FIG. 17

CHROMA

CU

LUMA

TL

TR

C

BL

BR

**FIG. 18**

Intra Chroma
PU to decode

Parse Cross-Component
flag and mode — 1904

Cross-Component prediction used for current PU? — yes

1906

no

Compute Dual tree conditon:
1908 — (SPS-level dual tree on && Intra Slice)

Compute chromaDBV enabled condition:
( !dual-tree-condition && co-located luma PU in
IntraTMP or IBC mode)
1910 — OR
( dual-tree-condition && a luma PU at any of 5 co-
located positions coded in Intra TMP or IBC mode)

chromaDBV condition fulfilled? — 1912

no                                           1914

yes

Parse chromaDBV flag

1916

chromaDBV flag is true? — yes

no

Parse chroma intra prediction mode — 1918

END

**FIG. 19**

Intra chroma
PU to decode

Parse Cross-Component
flag and mode — 2004

2006 — Cross-Component prediction used for current PU?    yes

no

Compute Dual tree conditon:
(SPS-level dual tree on && Intra Slice) OR (local dual-tree)

2008

Compute chromaDBV enabled condition:
( !dual-tree-condition && co-located luma PU in
IntraTMP or IBC mode)
OR
( dual-tree-condition && a luma PU at any of 5 co-
located positions coded in Intra TMP or IBC mode)

2010

chromaDBV condition fulfilled? — 2012

no          yes

Parse chromaDBV flag — 2014

2016

chromaDBV flag is true?    yes

no

Parse chroma intra prediction mode — 2018

END

# FIG. 20

Europäisches
Patentamt

European
Patent Office

Office européen
des brevets

**EUROPEAN SEARCH REPORT**

**Application Number**

EP 24 30 5564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/022739 A1 (LI GUICHUN [US] ET AL) 18 January 2024 (2024-01-18) * paragraph [0124] * * paragraph [0199] - paragraph [0202] * ----- | 1-15 | INV. H04N19/105 H04N19/11 H04N19/176 H04N19/186 H04N19/593 |
| X | J-Y HUO ET AL: "EE2-3.1: Direct block vector mode for chroma prediction", 29. JVET MEETING; 20230111 - 20230120; TELECONFERENCE; (THE JOINT VIDEO EXPLORATION TEAM OF ISO/IEC JTC1/SC29/WG11 AND ITU-T SG.16 ), , no. JVET-AC0071 ; m61640 4 January 2023 (2023-01-04), XP030306551, Retrieved from the Internet: URL:https://jvet-experts.org/doc_end_user/ documents/29_Teleconference/wg11/JVET-AC00 71-v1.zip JVET-AC0071-v1/JVET-AC0071-v1.docx [retrieved on 2023-01-04] * Abstract, Sections 1 and 2 * ----- | 1-15 | |
| X | RUIZ COLL (OFINNO) D ET AL: "EE2-related: Additional results to EE2-3.4", 29. JVET MEETING; 20230111 - 20230120; TELECONFERENCE; (THE JOINT VIDEO EXPLORATION TEAM OF ISO/IEC JTC1/SC29/WG11 AND ITU-T SG.16 ), , no. JVET-AC0165 ; m61747 4 January 2023 (2023-01-04), XP030306796, Retrieved from the Internet: URL:https://jvet-experts.org/doc_end_user/ documents/29_Teleconference/wg11/JVET-AC01 65-v1.zip JVET-AC0165_v1.docx [retrieved on 2023-01-04] * Section 1 * ----- -/-- | 1-15 | **TECHNICAL FIELDS SEARCHED (IPC)** H04N |

The present search report has been drawn up for all claims

| Place of search | Date of completion of the search | Examiner |
|---|---|---|
| Munich | 6 September 2024 | Vaquero, Raquel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 30 5564

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COBAN M ET AL: "Algorithm description of Enhanced Compression Model 10 (ECM 10)", 31. JVET MEETING; 20230711 - 20230719; GENEVA; (THE JOINT VIDEO EXPLORATION TEAM OF ISO/IEC JTC1/SC29/WG11 AND ITU-T SG.16 ), , no. JVET-AE2025 ; m64602 2 October 2023 (2023-10-02), XP030311977, Retrieved from the Internet: URL:https://jvet-experts.org/doc_end_user/documents/31_Geneva/wg11/JVET-AE2025-v1.zip JVET-AE2025-v1.docx [retrieved on 2023-10-02] * Section 3.1.13.6 * | 1,9 | |
| | ----- | | |

TECHNICAL FIELDS SEARCHED (IPC)

The present search report has been drawn up for all claims

| Place of search | Date of completion of the search | Examiner |
|---|---|---|
| Munich | 6 September 2024 | Vaquero, Raquel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

     ...............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 30 5564

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2024

| Patent document cited in search report | Publication date | Patent family member(s) | | Publication date |
|---|---|---|---|---|
| US 2024022739 A1 | 18-01-2024 | CN | 118235403 A | 21-06-2024 |
| | | KR | 20240046760 A | 09-04-2024 |
| | | US | 2024022739 A1 | 18-01-2024 |
| | | WO | 2024015109 A1 | 18-01-2024 |

EPO FORM P0459

For more details about this annex : see Official Journal of the European Patent Office, No. 12/82